Europäisches Patentamt

European Patent Office

Office européen des brevets

(11) Publication number: 0 359 319 A2

# EUROPEAN PATENT APPLICATION

(21) Application number: 89202272.4

(22) Date of filing: 08.09.89

(51) Int. Cl.5: G01N 30/88 , G06F 15/20 , G01N 30/86

(30) Priority: 14.09.88 GB 8821560
14.12.88 GB 8829160

(43) Date of publication of application:
21.03.90 Bulletin 90/12

(84) Designated Contracting States:
CH DE FR GB IT LI NL SE

(71) Applicant: PHILIPS ELECTRONIC AND
ASSOCIATED INDUSTRIES LIMITED
Philips House 188 Tottenham Court Road
London W1P 9LE(GB)
(84) GB

Applicant: N.V. Philips' Gloeilampenfabrieken
Groenewoudseweg 1
NL-5621 BA Eindhoven(NL)
(84) CH DE FR IT LI NL SE

(72) Inventor: Dunand, Nicholas Charles
c/o PHILIPS SCIENTIFIC York Street
Cambridge CB1 2PX(GB)
Inventor: Blaffert, Thomas c/o PHILIPS
PATENTVERWALTUNG GMBH
Wendenstrasse 35 Postfach 105149
D-2000 Hamburg 1(GB)

(74) Representative: Andrews, Arthur Stanley et al
PHILIPS ELECTRONICS Patents and Trade
Marks Department Centre Point New Oxford
Street
London WC1A 1QJ(GB)

(54) Chromatography.

(57) Chromatography apparatus which is capable of deriving optimum conditions for an analysis includes data processing means which comprises calculating means (20) which is supplied with initial conditions (24) which may be entered by the chromatographer and which may be calculated from the results of an initial chromatogram, limits and requirements (25) which relate limiting values of parameters of the chromatograph and to the required selectivity and sensitivity of the analysis and which are entered by the chromatographer, and the detector time constant (23) which is selectable, within limits, by the chromatographer. The data processing means also includes a column data base (21) which contains data specifying the available separating columns and a detector data base (22) which contains data specifying the available detectors.

The optimisation criteria are the minimum possible analysis time coupled with adequate peak separation and sensitivity. The optimum conditions are obtained by calculating maximum mobile phase flow rates which produce the required peak separation and sensitivity with each available separating column, detector, time constant combination and selecting that combination which allows the fastest analysis (26). The conditions may either be automatically set up or indicated to the chromatographer by means of a display unit or a hard copy may be produced by a printer.

## Fig.2.

| COLUMN NUMBER | LENGTH L (mm) | DIAMET. $d_c$ (mm) | PARTICLE SIZE $d_p$ (μm) | POROSITY $\epsilon$ | EFFIC-IENCY FACTOR $\eta$ | PERMEA-BILITY FACTOR $\phi$ | PRESSURE DROP $P_{col,\,min}$ | $P_{col,\,max}$ | FLOW RATE $F_{col,\,min}$ | $F_{col,\,max}$ | SAMPLE SIZE $Q_{col,max}$ |
|---|---|---|---|---|---|---|---|---|---|---|---|
| 1 | 300 | 4.6 | 10 | 0.63 | 1.0 | 1.0 | 6 | 61 | 0.08 | 6.4 | 0.24 |
| 2 | 150 | 4.6 | 5 | 0.61 | 1.0 | 1.0 | 25 | 246 | 0.16 | 12.8 | 0.24 |
| 3 | 100 | 4.6 | 3 | 0.58 | 0.9 | 1.1 | 83 | 834 | 0.27 | 21.3 | 0.24 |
| 4 | 250 | 4.6 | 8 | 0.63 | 1.0 | 1.0 | 10 | 100 | 0.1 | 8.0 | 0.24 |
| 5 | 250 | 2.0 | 8 | 0.63 | 1.0 | 1.1 | 11 | 110 | 0.02 | 1.5 | 0.04 |
| 6 | 250 | 1.0 | 8 | 0.63 | 0.9 | 1.2 | 12 | 120 | 0.004 | 0.4 | 0.02 |

# CHROMATOGRAPHY

The invention relates to chromatography apparatus and to a method of performing a chromatographic separation.

The requirements for an ideal chromatographic separation from a user's point of view are (i) sufficient separation and (ii) sufficient sensitivity in (iii) the shortest possible time. In order to achieve this, the retention needs to be brought into the optimum range and the chromatographic selectivity either needs to be adequeate from the start or optimised. Methods of optimisation of selectivity are disclosed in, for example "The optimisation of chromatographic selectivity; A guide to method development" by P.J. Schoenmakers published by Elsevier, Amsterdam, 1986. Retention (in terms of capacity factors) and selectivity is controlled by the nature and composition of the mobile and stationary phases and by physical parameters such as temperature and pH. However, even when a phase system has been selected and all the physical parameters have been fixed, the chromatographer is left with many choices ("chromatographic parameters") that may affect the outcome of the separation with respect to the three criteria (or "analytical goals") listed above. The most important chromatographic parameters in high-pressure liquid chromatography (HPLC) are

a) column dimensions (length, diameter, particle size),

b) operating conditions (flow rate, attenuation),

c) sample parameters (injection volume, dilution factor), and

d) the instrument.

The instrument should be compatible with the selected column, operating conditions, and the sample. Among the relevant aspects of the instrumentation are the external dispersion; flow and pressure ranges; and the sensitivity, noise, and time constant of the detection. If insufficient attention is paid to instrumental parameters, good chromatographic separations may not be achieved.

If the chromatographer is able to make all the right choices for the chromatographic parameters, significant improvements can be made towards the achievment of the three analytical goals. Unfortunately, making all the right choices is very difficult, due to the many interdependencies between the numerous different parameters. A reasonably complete but concise description of the subject of chromatographic optimisation "High performance liquid chromatography" Vol. 2, pp 1-56, editor Cs. Horvath, Academic Press, New York, 1980, may transfer the required knowledge from an expert (author) to a user (reader). However, much effort is required from the user to read and digest the knowledge and then to apply it in the correct manner. As a consequence, most separations are performed at conditions far removed from the optimum and the chromatographer achieves much less than what is theoretically and practically possible.

One way to cope with the complexity of chromatographic optimisation is the use of a simulation program as disclosed in an article entitled "Computer Simulation as a Means of Developing an optimised Reversed-Phase Gradient-Elution Separation" by J.W. Dolan, L.R. Snyder and M.A. Quarry published in Chromatographia 24 (1987) pp 261-276. This allows the user to study the effects of changes in various parameters on the resulting chromatogram, without having to perform experiments. As such, simulation programs can be excellent learning tools. The programs can also be used to yield a satisfactory solution to a given separation problem. What a simulation program will not do, however, is provide the best or optimum solution to the problem.

It is an object of the invention to enable the provision of chromatograph apparatus capable of performing an optimum separation, or of indicating to a chromatographer optimum conditions for performing a given separation within the constraints of available instrument components.

The invention provides liquid chromatography apparatus comprising means for delivering a mobile phase at a desired flow rate and pressure to a separating column, a sample injector for injecting a sample into the column, a detector for detecting separated sample components eluting from the column, and signal processing apparatus for processing the detector output, said signal processing apparatus, cooperating with data processing apparatus said data processing apparatus comprising means for storing data specifying available separating columns, detectors and solvent delivery systems, means for entering data relating to an initial chromatogram, and means for generating apparatus optimisation data from the data relating to the initial chromatogram and the data specifying the available separating columns, detectors and mobile phase delivery means.

The chromatography apparatus may comprise liquid chromatography apparatus wherein the means for delivering a mobile phase comprises a pump.

The optimisation criteria may be the degree of separation of peaks, the sensitivity, and the time taken to complete an analysis.

In this way the fastest possible analysis time with a given apparatus can be achieved while maintaining adequate separation of peaks and sensitivity. The speed of analysis is important in enabling a large number of samples to be analysed in the shortest possible time with the available equipment. Thus use of the apparatus according to the invention enables the efficiency of an analytical laboratory to be improved by allowing a greater throughput of samples to be analysed for a given amount of equipment.

The apparatus may comprise means for entering data defining the required selectivity and sensitivity, the optimisation data generating means being arranged to produce optimisation data the use of which enables the shortest analysis time to be achieved.

The optimisation data generating means may additionally produce an output indicating which constraint on the operation of the apparatus is limiting the optimisation of the apparatus. This enables the chromatographer to decide whether to relax one or more of the requirements to enable an even faster analysis time to be achieved.

The data processing apparatus may be arranged to solve a series of equations relating mobile phase flow rate to the other parameters of the chromatography apparatus to determine a series of maximum flow rates which cannot be exceeded while maintaining the required separation and sensitivity and falling within the allowable range for the instrument.

The data processing apparatus may be arranged to solve a further set of equations relating mobile phase flow rate to other parameters of the chromatography apparatus to determine a series of minimum flow rates which have to be exceeded to maintain the required separation and sensitivity and to be within the allowable range for the apparatus.

The data processing apparatus may be arranged to solve the first and further sets of equations for each possible column, detector, time constant combination to determine the overall minimum analysis time. This enables a set of global optimum conditions to be found using all the variables of all the components of all of the chromatographic apparatus available to the chromatographer. The chromatographer can also be made aware of those constraints which are limiting particular analyses so that more relaxed requirements may be specified if appropriate or when equipment is updated particular attention can be paid to the choice of components that have a greater capability in certain parameters to enable a more efficient configuration to be obtained.

The invention further provides a method of performing a chromatographic separation comprising the steps of

a) performing an initial chromatographic separation and optimising the retention and selectivity if required,

b) entering the results produced by step a) into data processing apparatus,

c) entering data specifying parameters of the available chormatography apparatus into said data processing apparatus

d) processing the data entered in steps b) and c) to determine the apparatus configuration which will given an optimum chromatographic separation according to desired criteria,

e) either automatically configuring the chromatographic apparatus to give the optimum chromatographic separation or producing on an output device information defining the configuration of the chromatographic apparatus which will produce the optimum chromatographic separation.

The criteria may include the shortest possible time to perform a chromatographic separation while maintaining a specified peak separation. In which case the method may comprise the step of entering a desired separation requirement into said data processing apparatus.

The criteria may include the shortest possible time to perform a chromatographic separation while maintaining a specified sensitivity or signal-to-noise ratio. In which case the method may comprise the step of entering a desired minimum sensitivity or signal-to-noise ratio into said data processing apparatus.

The method may include the step of assessing the initial chromatogram to obtain the retention times of the individual component peaks, the resolution of the chromatogram and the sensitivity or signal-to-noise ratio of the chromatogram to produce the results for entering in step b), the parameters used to obtain the initial chromatogram also being entered into the data processing apparatus.

Step c) may be performed by entering data specifying available separating columns and detectors in memory means which cooperates with said data processing means.

Step c) may include the step of entering data defining maximum and minimum limits for mobile phase flow rates and pressures and may also include the step of entering a detector time constant.

Sted d) may comprise solving a set of equations relating mobile phase flow rate to the other parameters of the chromatographic apparatus to determine a series of maximum flow rates which cannot be exceeded while maintaining the required sensitivity and/or separation and falling within an allowable range for the apparatus and selecting the lowest of the series of maximum flow rates.

Step d) may further comprise solving a further set of equations relating mobile phase flow rate to the other parameters of the chromatographic apparatus to determine a series of minimum flow rates which have to be exceeded to maintain the required separation and sensitivity and to be within the allowable rate for the apparatus and determining whether the lowest of the series of maximum flow rates is greater than the highest of the series of minimum flow rates.

The method may include the step of indicating that a set of operating conditions is valid if the lowest of the series of maximum flow rates is greater than or equal to the highest of the series of minimum flow rates.

Step d) may comprise calculating the maximum mobile phase flow rate possible while maintaining a required separation and sensitivity or signal-to-noise ratio and not exceeding apparatus limitations for each separating column, detector, time constant combination; calculating the minimum flow rate possible while maintaining a required separation and sensitivity or signal-to-noise ratio and not exceeding apparatus limitations for each separating column, detector, time constant combination; checking that the maximum flow rate possible for a given combination is greater than or equal to the minimum flow rate possible for that combination and, if so, designating it a valid combination; calculating the analysis time for each valid separating column, detector, time constant combination using the associated maximum flow rate; and selecting the valid combination having the minimum calculated analysis time as the optimum apparatus configuration.

The chromatographic separation may be a liquid chromatographic separation.

An embodiment of the invention will now be described, by way of example, with reference to the accompanying drawings, in which:-

Figure 1 shows in diagrammatic form liquid chromatography apparatus according to the invention,

Figure 2 shows an example of a separating column data base,

Figure 3 shows the organisation of data processing apparatus forming part of the liquid chromatography apparatus of Figure 1,

Figure 4a shows a first set of equations for use in the data processing apparatus in performing the method according to the invention,

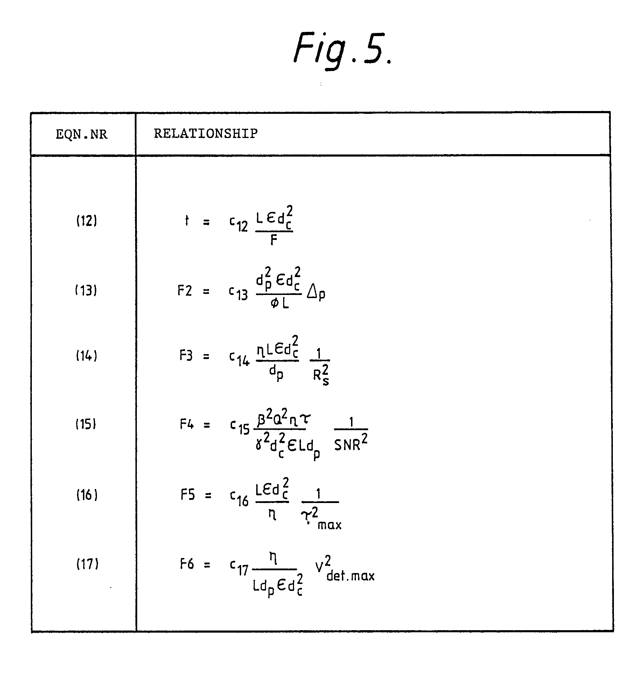

Figure 4b is a table defining symbols used in the equations shown in Figures 4a and 5,

Figure 5 shows a further set of equations for use in the data processing apparatus in performing the method according to the invention,

Figure 6 is a flow diagram illustrating a procedure in accordance with the method according to the invention,

Figure 7 shows a summary of system input parameters and limits and requirements which are used in conjunction with the column and detector data bases to produce an optimum analysis and the parameters produced by the data processing arrangement to enable the chromatographer to perform an optimum analysis, and

Figures 8a and 8b illustrate a particular example of an optimisation of an experimentally produced chromatogram.

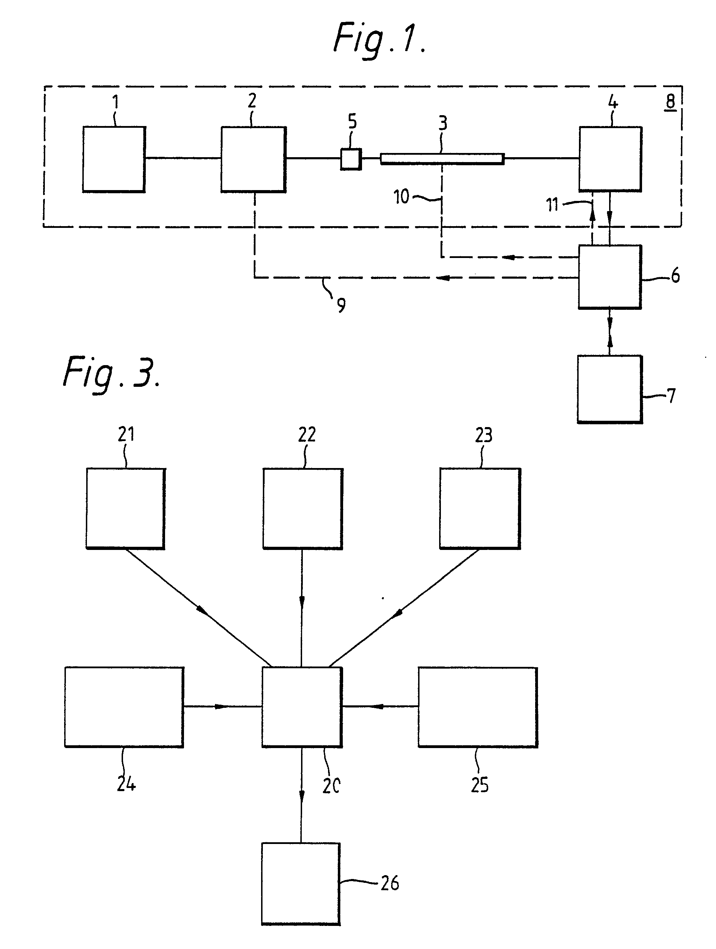

Figure 1 shows an embodiment of the invention in the form of a liquid chromatograph apparatus comprising a reservoir 1 for the mobile phase and a pump 2 for pumping the mobile phase at a desired flow rate through a separating column 3 to a detector 4. A sample injector 5 is connected between the outlet of the pump 2 and the inlet of the column 3 to enable a sample which is to be chromatographically separated to be applied to the column. The detector 4, which will include a detector flow cell through which the column eluent flows, is arranged to produce an electrical signal which is dependent on the composition of the eluent flowing through the cell. The electrical output of the detector 4 is fed to a computer 6 which is arranged to produce information for display on a display unit 7, for example a video display unit. The display unit 7 is also provided with a keyboard for entering data into the computer 6.

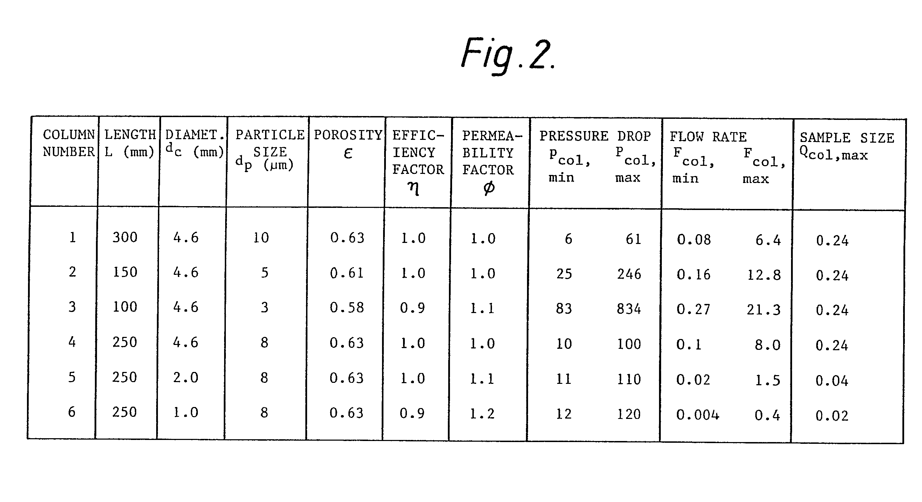

The components which make up the liquid chromatograph which performs the chromatographic separation are contained within the dotted box 8. Components of a sample injected into the separating column 3 via the sample injector 5 are detected by the detector 4 which produces a chromatogram showing the separated component peaks. When the chromatographer has selected the parameters to provide adequate retention and selectivity and optimised them, if desired, an initial chromatogram is obtained which is entered into the computer 6 where it is evaluated and the parameter values used to obtain the chromatogram are processed. The computer 6 is provided with a data base defining the available separating columns and detectors. A typical column data base is given in Figure 2.

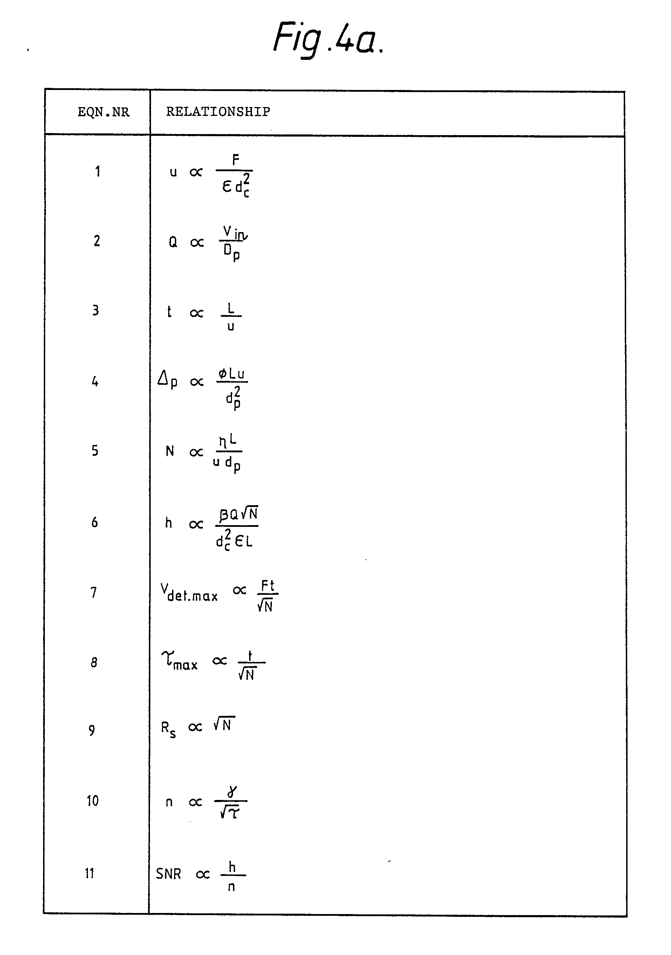

The computer 6 is organised as shown in Figure 3 which shows diagrammatically the input data used to perform calculations and the data produced as a result of the calculations. In Figure 3 the box 20 represents the central processing unit which performs calculations using data stored in a data base and various conditions relating to a specific analysis to be performed entered by a user. Box 21 represents the separating column data base which may be of the form shown in Figure 2. Box 22 represents the detector data base which similarly specifies the parameters of the available detectors. Box 23 represents all possible detector time constants. Box 24 represents initial conditions which are produced from an assessment of the initial chromatogram. Box 25 represents limits and requirements which are set by the chromatographer and entered on the keyboard. Box 26 represents the optimum operating conditions which are obtained as a result of the calculations and are the outputs of the computer 6.

The initial conditions represented by Box 24 are obtained from the initial chromatogram which is assessed to produce three values. These are i) the overall analysis time $t_{ini}$ obtained from a measurement of the retention times of the individual component peaks; ii) the resolution $R_{s,ini}$ of the chromatogram, which is calculated from the widths and distances between each pair of peaks; and iii) the sensitivity or the signal-to-noise ratio $SNR_{ini}$ of the chromatogram which is a measure of the difference between the peak heights and noise spikes in the system. Also included in the initial conditions are the instrument parameters used to produce the initial chromatogram and these may be entered by the chromatographer using the keybord. These will normally be merely a record of which column and detector were used, rather than detailing the parameters of the column and detectors since these parameters are already available to the computer 6 from the column and detector data bases. Further information entered by the chromatographer will include the mobile phase composition and flow rate used to obtain the initial chromatogram.

The detector data base represented by Box 22 contains data representing each of the detectors which are available. There are three particular factors which influence the quality of the chromatogram. These are the detector volume $V_{det}$, which affects the dispersion (the larger the volume the wider the peaks become); the sensitivity factor $\beta$ and the noise factor $\gamma$ which represents the differences in sensitivity and noise produced by different detectors under identical conditions.

The possible detector time constants $\tau$ represented by Box 23 are a measure of the speed with which the detector responds to a signal. They can alternatively be considered as the bandwidth of the detector. Typically detector time constants lie in a range between 20 msecs and 100msecs and can be selected in discrete steps by the chromatographer. The time constant has two opposing effects on the quality of the chromatogram. As the time constant is increased the dispersion of the chromatogram is increased (broadening the peaks in terms of time) leading to a reduction in the quality of the chromatogram while the effect of noise is decreased leading to an increase in the quality of the chromatogram.

Box 25 represents limits and requirement. The limits include the sample volume, which is the maximum amount of sample which is available for analysis ($Q_{samp,max}$), and the instrumental limits which are principally the maximum and minimum flow rates ($F_{min,inst}$; $F_{max,inst}$) and pressure drops ($\Delta P_{max,inst}$; $\Delta P_{min,inst}$) the instrument can achieve. The requirements are the resolution ($R_{s,req}$) and the signal-to-noise ratio ($SNR_{req}$) the chromatographer desires to achieve for the analysis. The limited sample volume and the instrumental limits are hard physical limits whereas the chromatographer's requirements can be modified to express higher or lower demands for the quality of an analysis.

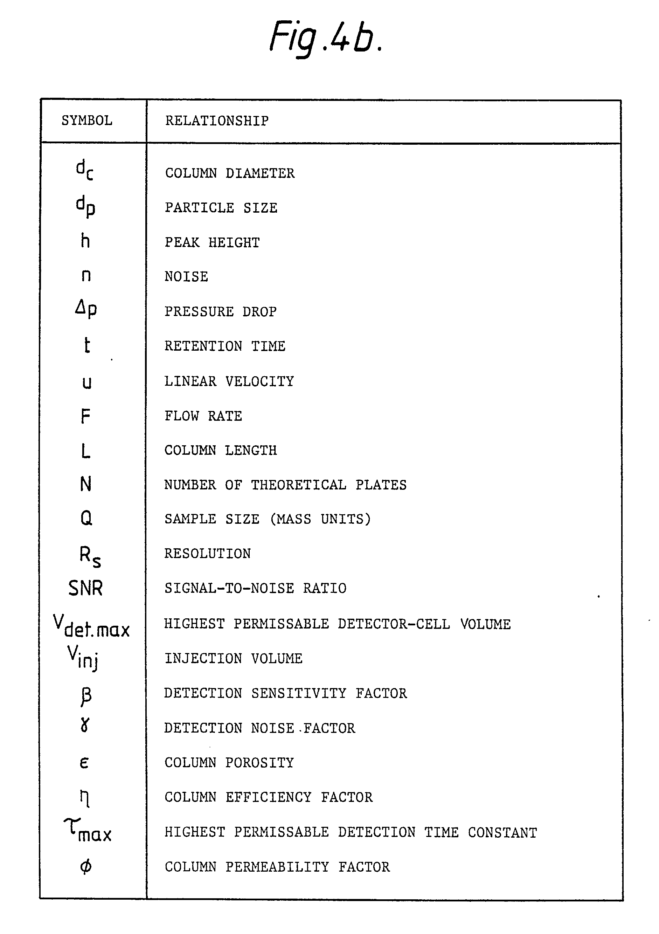

The Box 20 represents the calculations performed by the computer 6 in order to determine the optimum operating conditions. The complex inter-relationships between the operating parameters are shown in the equations 1 to 11 which are given in Figure 4a). The symbols used in equations 1 to 11 are defined in Figure 4b). The relationships given in Figure 4a) have been taken from the book by P.J. Schoenmakers referred to in the introductory part of this specification. It should be noted that these equations are not the only ones which can be used to express the inter-relationships and that other sets of equations could be substituted to give similar results.

There are two main problems for the chromatographer in using these relationships to optimise the chromatogram. First the large number of relationships and secondly the opposing and interactive effects of altering parameters within these relationships. Thus in practice the chromatographer either ignores some of the relations and limitations or, while considering them all, the chromatographer attempts to fix each parameter in turn resulting in a local rather than a global optimum.

In order to obtain a global optimum the following procedure, which is a procedure within the method according to the invention, may be undertaken. Equation 12 can be derived by combining equations 1 and 3 and shows that for a given column/detector/time constant combination the highest attainable flow rate gives the shortest analysis time. This is the requirement iii) in the second paragraph for an optimum analysis. Consequently to obtain the optimum parameters for a given column/detector time constant combination the highest possible flow rate is found which

a) maintains the required sensitivity and separation, i.e. requirements i) and ii) in the second paragraph,

b) respects the hard limits of the syster e.g. maximum and minimum flow rates and pressures, and

c) respects the detector limits on dispersion of the chromatogram in terms of the detector cell volume and time constant.

Equations 13 to 17 can be derived from equations 4, 7, 8, 9 and 11, which relate the limits and requirements to the operating parameters, by substitution using equations 1, 2, 5, 6 and 10 where necessary. Equations 13 to 17 are written in terms of flow rate and enable minimum and maximum flow rates to be determined.

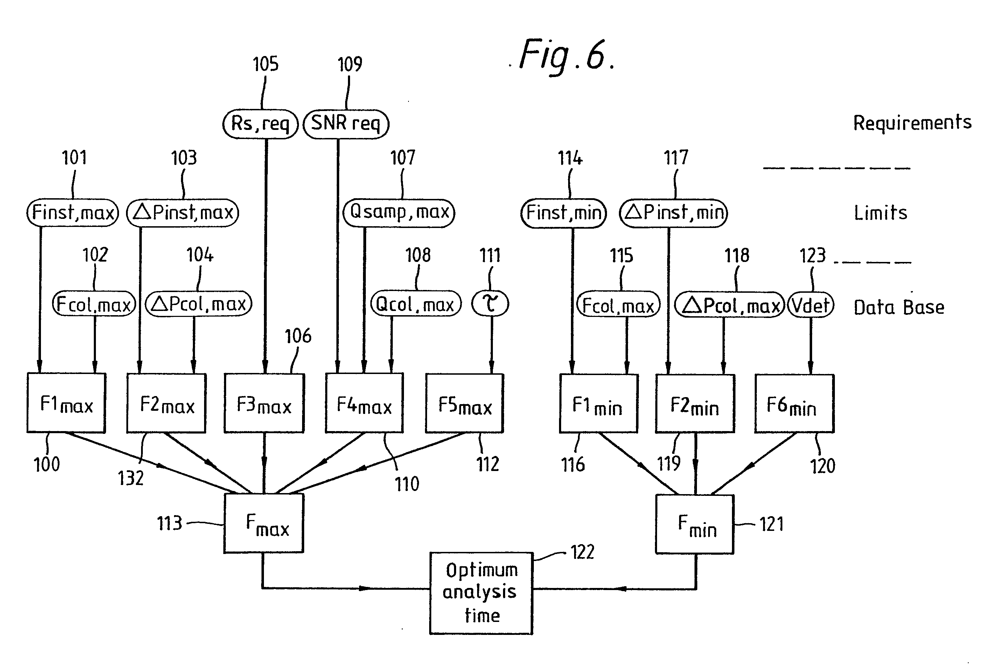

Figure 6 represents the calculation of flow rate limits. Box 100 represents the calculation of a first maximum flow rate $F1_{max}$ which is the lower of the maximum flow rate the pump 2 is capable of delivering (Box 101) and the maximum flow rate the column can withstand (Box 102). The maximum flow rate of the pump 2 is a hard instrumental limit while the maximum flow rate the column can withstand can be obtained from the column data base. Box 103 represents the calculation of a second maximum flow rate $F2_{max}$. The flow rate F2 is given in equation 13 in terms of a given set of column parameters and the pressure drop. Thus if the pump 2 or other instrumental limitation has an upper pressure drop limit of $P_{inst\ max}$ then this defines an upper flow rate limit. This limit is a hard, instrument, limit and is represented by Box 103. Similarly a particular column will have an upper pressure limit as can be seen from Figure 2 which will again define an upper flow rate limit. The column maximum pressure limit $\Delta P_{col,max}$ is represented by Box 104 and is obtained from the column data base. Box 132 represents the maximum flow rate $F2_{max}$ which is derived from the lower of $\Delta P_{inst,max}$ and $\Delta P_{col,max}$ using equation 13.

Equation 14 can be derived using equations 1, 5 and 9 to give a flow rate F3 in terms of column parameters and resolution. The required resolution is entered by the analyst and is represented by Box 105. Box 106 represents the calculation of the maximum flow rate $F3_{max}$ which enables the entered resolution requirement $R_{s\ req}$ to be achieved using a specified column. A greater flow rate than F3 max will not give suficient separation.

Equation 15, which shows flow rate in terms of a column/detector/time constant combination, sample volume and signal-to-noise ratio or required sensitivity, can be obtained by combining equations 1, 2, 5, 6 and 11. By inspection of equation 15 it can be seen that the higher the sample volume (Q) the higher the signal-to-noise ratio (SNR) can be for a given flow rate. Consequently Q is made as large as possible which is either $Q_{samp,max}$, i.e. limited only by the amount of sample available for the analysis, Box 107, or is $Q_{col,max}$, i.e. the maximum sample volume which can be injected without overloading the column, Box 108. $Q_{samp,max}$ is entered by the chromatographer while $Q_{col,max}$ is obtained from the column data base and is represented by Box 108. The sensitivity required (or $SNR_{req}$) is entered by the chromatographer and is represented by Box 109. Box 110 ($F4_{max}$) represents the solving of equation 15 to determine the maximum value for the flow rate F4. Any value greater than the maximum will result in the sensitivity requirement not being met.

Equation 16 can be derived using equations 1, 3, 5 and 8 and shows the flow rate in terms of detector time constant. Time constant distortion is a restriction which is inherent in the detection system of any chromatograph. With all other parameters held constant there is a maximum value for the time constant $\tau$ max beyond which peaks become distorted. The current column parameters are assumed and assuming $\tau$ max is the current $\tau$ (Box 111) a value for the maximum flow rate $F5_{max}$ is calculated, Box 112. A flow rate greater than $F5_{max}$ will produce distortion of the peaks.

The maximum flow rates $F1_{max}$ to $F5_{max}$ are then inspected, as represented by Box 113, to obtain the lowest of these values which is then the highest allowable flow rate with the specified parameters.

It is also necessary to ensure that this highest allowable flow rate, i.e. the lowest of $F1_{max}$ to $F5_{max}$, is above certain constraints on the minimum allowable flow rates.

Flow rate F1 besides having a maximum value also has a minimum value. Box 114 represents the minimum flow producable by the instrument, primarily limited by the capability of the pump 2, $F_{inst,min}$ while Box 115 represents the minimum permissible flow rate through the column $F_{col,min}$. Thus $F1_{max}$ is produed in Box 116 in the same way as $F1_{max}$ is produced in Box 100, i.e. the highest of the two minimum flow rates $F_{inst,min}$ and $F_{col,min}$ is produced as $F1_{min}$.

Similarly flow rate F2 also has a minimum value given by minimum allowable instrument and column pressure drops $\Delta P_{inst,min}$ and $\Delta P_{col,min}$. These are shown in Boxes 117 and 118. The minimum flow rate $F2_{min}$ is calculated (Box 119) in the same way as the maximum flow rate $F2_{max}$, Box 102. The value of $F2_{min}$ is consequently the higher of the two values produced using the minimum instrument and column pressures. Any flow rate below $F2_{min}$ is either not physically or reliably possible for the instrument (pump 2) or is not applicable to the column.

Equation 17, which can be derived from equations 1, 3, 5 and 7, shows flow rate F6 in terms of detector cell volume and column parameters. External volume distortion is a restriction on the volume of the detector cell above which peak distortion becomes unacoeptable. The current column parameters are used together with the current detector cell volume obtained from the detector data base, Box 123, to perform the calculation of the flow rate $F6_{min}$ using equation 17, Box 120.

The minimum flow rates $F1_{min}$, $F2_{min}$ and $F6_{min}$ are assessed to find the highest minimum flow rate, Box 121, and provided that the lowest of the

maximum flow rates $F1_{max}$ to $F5_{max}$ is greater than or equal to the highest of the minimum flow rates $F1_{min}$, $F2_{min}$ and $F6_{min}$ then the column/detector time constant combination is valid and the optimum conditions are with a flow rate $F_{max}$ which is the lowest of $F1_{max}$ to $F5_{max}$. Since the analysis time can be determined by means of equation 12, the best possible analysis time for a given column/detector/time constant combination can be found.

This process is repeated for all column/detector time constant combinations and the results stored or produced as a list. The results are then inspected to find the shortest analysis time and the conditions displayed or printed to enable the chromatographer to perform an overall optimum analysis. In a partially or fully automatic system the flow rate can be directly controlled by the computer 6 over path 9. Similarly a column switching arrangement could be used to select the desired column and might be controlled over line 10 and similarly the column outlets could be switched to selected detectors by means of control signals over line 11. Alternatively the chromatography apparatus and conditions are 7, manually set up by the chromatographer using the parameters produced by the computer 6.

The following information can be indicated to the chromatographer.

1) The combination of column, detector and time constant which produces the overall minimum analysis time.

2) The maximum flow rate possible to obtain the chromatogram together with predicted values of the resultant chromatogram, for example resolution, signal-to-noise ratio or sensitivity, peak times, pressure drop.

3) Information on which of the constraints on the chromatographic apparatus is actually limiting the analysis time. For example if the required resolution is preventing a faster analysis the analyst may decide to relax that requirement but if the restraint is $F_{inst,max}$ there is nothing that can be done to further reduce the analysis time with that particular apparatus.

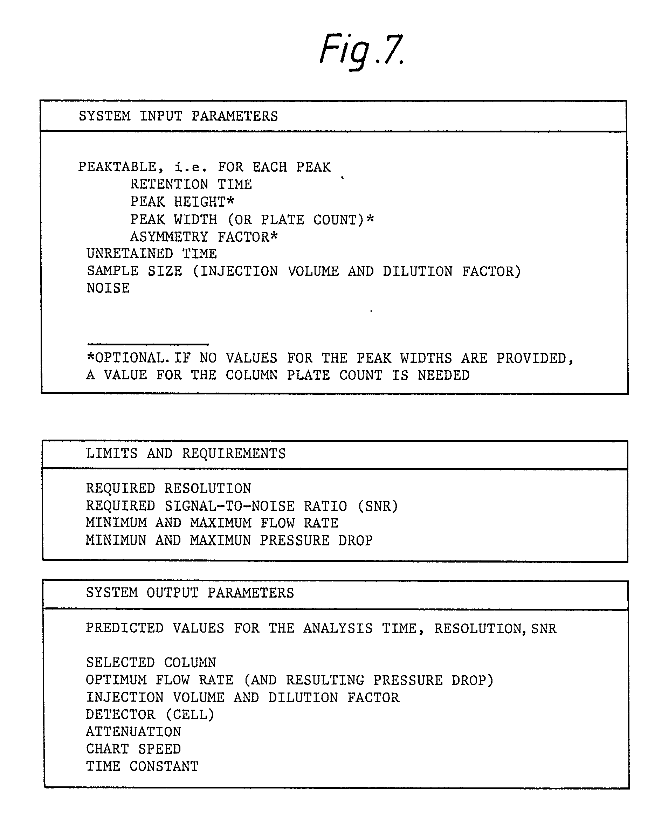

Figure 7 shows a summary of system input parameters and limits and requirements which are used in conjunction with the column and detector data bases to produce an optimum analysis and the parameters produced by the data processing arrangement to enable the chromatographer to perform an optimum analysis.

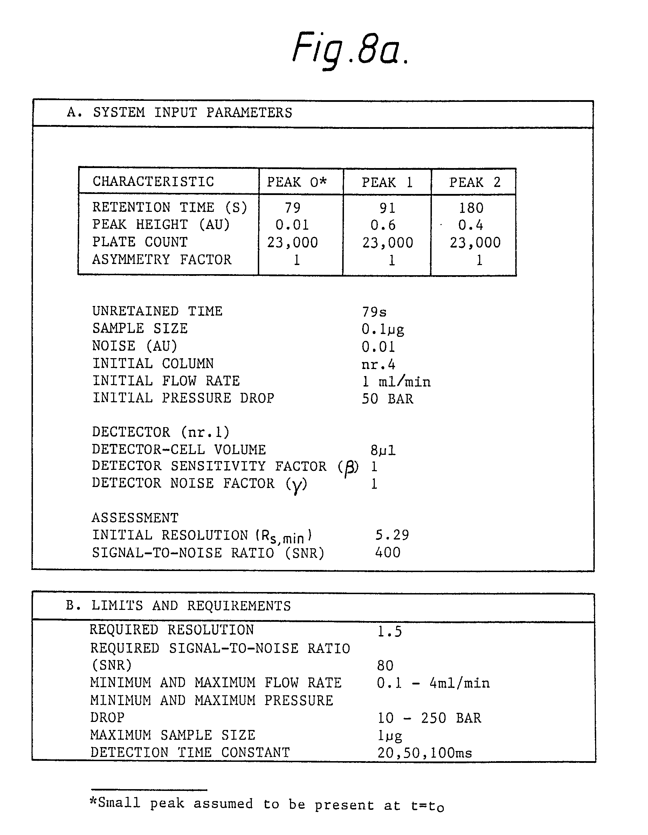

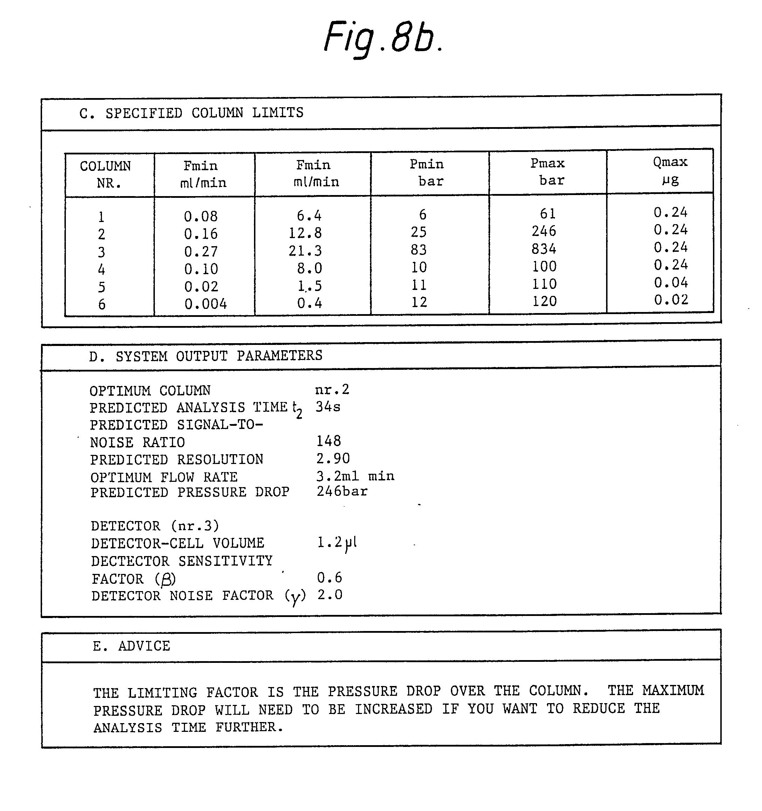

Figures 8a and 8b illustrate a particular example of an optimisation of an experimentally produced chromatogram. The column data base of Figure 2 was used for this example and the column used to generate the initial chromatogram was Nr.4.

The results of the chromatogram assessment are listed in the first section of Figure 8a. In this example a constant plate count ($N = 23,000$) and symmetrical peaks ($A_s = 1$) have been assumed. As a result, the minimum resolution in the initial chromatogram was assessed as 5.39, the resolution between the two 'real' peaks (1 and 2) being the limiting factor. The lowest (relevant) signal is that for peak nr.2, for which the signal-to-noise ratio was assessed as 400.

The flow and pressure limits for each column were calculated assuming that the flow is proportional to the square of the column diameter and inversely proportional to the particle size. The pressure drop was calculated from Eqn.(4) in Figure 4a. The initial column was assumed to have a specified flow range of 0.1 to 8 ml/min and a specified pressure range of 10 to 100 bar. The flow and pressure limits for each column are listed in Figure 8b Section c). The maximum values specified for a column may be high, but in that case the specified instrumental (or overall) maximum will apply, i.e the values from Figure 8a Section b). The maximum sample size was 0.24 μg for 4.60mm i.d. columns, 0.08 for 2mm columns and 0.04 for 1mm columns.

Three detectors were considered with cell volumes, sensitivity factors and noise factors as follows: 8μl, 1.0 and 1.0 for cell nr.1, 2.4μl, 0.8 and 1.5 for cell nr.2, and 1.2μl, 0.6 and 2.0 for cell nr.3. Also, three different time constants were allowed, namely 20, 50 and 100 ms.

Figure 8b Section d) lists the complete set of (predicted) values for the global optimum as can be displayed on the display unit 7. The global optimum is found for column nr.2 and the conditions at which the optimum is reached can be made immediately available in different windows on the screen. Figure 8b Section e) shows the kind of advice that follows from knowing the limiting factor in the optimisation process.

The chromatographer may proceed from here by changing one of the specified limits, for example by following the suggestion of the system to increase the maximum pressure drop. A next optimisation cycle can be performed very rapidly and conveniently.

The apparatus also enables the chromatographer to establish a local optimum for one particular column. For example, the chromatographer may ask the system the local optimum if the initial column is maintained. The arrangement can provide the full set of data, including flow rate, SNR, etc. Under the present set of conditions, the column pressure drop always turns out to be the limiting factor, except for the last two columns. These narrow-bore columns cannot be used for the present example, because the available detector cells would cause excessive extra-column dispersion. Different results would have been obtained if only detection time constants of 100 and 50 ms had been available. In this case, the time constant becomes the limiting factor for two of the four possible columns.

Although the invention has primarily been described with reference to liquid chromatography apparatus and to a method of analysis by liquid chromatography, it is equally applicable to many forms of chromatographic analysis including gas chromatography although as would be well known to those skilled in the art the relationships between the instrumental parameters would be different. However, similar overall optimisation criteria would apply.

From reading the present disclosure, other modifications will be apparent to persons skilled in the art. Such modifications may involve other features which are already known in the design and use of chromatography apparatus or methods of performing chromatographic separations and components parts thereof and which may be used instead of or in in addition to features already described herein. Although claims have been formulated in the application to particular combinations of features, it should be understood that the scope of the disclosure of the present application also includes any novel feature or any novel combination of features disclosed herein either explicitly or implicitly or any generalisation of one or more of those features which would be obvious to persons skilled in the art, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

## Claims

1. Chromatography apparatus comprising means for delivering a mobile phase at a desired flow rate and pressure to a separating column, a sample injector for injecting a sample into the column, a detector for detecting separated sample components eluting from the column, and signal processing apparatus for processing the detector output, said signal processing apparatus cooperating with data processing apparatus, said data processing apparatus comprising means for storing data specifying available separating columns detectors and solvent delivery systems, means for entering data relating to an intial chromatogram, and means for generating apparatus optimisation data from the data relating to the initial chromatogram and the data specifying the available separating columns, detectors and mobile phase delivery means.

2. Chromatography apparatus as claimed in Claim 1 comprising liquid chromatography apparatus wherein the means for delivering a mobile phase comprises a pump.

3. Chromatography apparatus as claimed in Claim 1 or Claim 2, in which the optimisation criteria are the degree of separation of peaks, the sensitivity, and the time taken to complete an analysis.

4. Chromatography apparatus as claimed in Claim 3, comprising means for entering data defining the required selectivity and sensitivity, the optimisation data generating means being arranged to produce optimisation data the use of which enables the shortest analysis time to be achieved.

5. Chromatography apparatus as claimed in any of Claims 1 to 4, in which the optimisation data generating means additionally produces an output indicating which constraint on the operation of the apparatus is limiting the optimisation of the apparatus.

6. Liquid chromatography apparatus as claimed in any preceding claim in which a series of equations relating mobile phase flow rate to the other parameters of the chromatography apparatus are solved to determine a series of maximum flow rates which cannot be exceeded while maintaining the required separation and sensitivity and falling within the allowable range for the instrument.

7. Chromatography appartus as claimed in Claim 6 in which a further set of equations relating mobile phase flow rate to other parameters of the chromatography apparatus are solved to determine a series of minimum flow rates which have to be exceeded to maintain the required separation and sensitivity and to be within the allowable range for the apparatus.

8. Chromatography apparatus as claimed in Claim 7, comprising means for solving the first and further sets of equations for each possible column, detector, time constant combinations to determine the overall minimum analysis time.

9. A method of performing a chromatographic separation comprising the steps of
   a) performing an initial chromatographic separation and optimising the retention and selectivity if required,
   b) entering the results produced by step a) into data processing apparatus,
   c) entering data specifying parameters of the available chromatograph apparatus into said data processing apparatus,
   d) processing the data entered in steps b) and c) to determine the apparatus configuration which will given an optimum chromatographic separation according to desired criteria,

e) either automatically configuring the chromatographic apparatus to give the optimum chromatographic separation or producing on an output device information defining the configuration of the chromatographic apparatus which will produce the optimum chromatographic separation.

10. A method as claimed in Claim 9 in which the criteria include the shortest possible time to perform a chromatographic separation while maintaining a specified peak separation.

11. A method as claimed in Claim 10, comprising the step of entering a desired separation requirement into said data processing apparatus.

12. A method as claimed in any of Claims 9 to 11, in which the criteria include the shortest possible time to perform a chromatographic separation while maintaining a specified sensitivity or signal-to-noise ratio.

13. A method as claimed in Claim 12 comprising the step of entering a desired minimum sensitivity or signal-to-noise ratio into said data processing apparatus.

14. A method as claimed in any of Claims 9 to 13 including the steps of assessing the initial chromatogram to obtain the retention times of the individual component peaks, the resolution of the chromatogram and the sensitivity or signal-to-noise ratio of the chromatogram to produce the results for entering in step b), the parameters used to obtain the initial chromatogram also being entered into the data processing apparatus.

15. A method as claimed in any of Claims 9 to 14, in which step c) is performed by entering data specifying available separating columns and detectors in memory means which co-operates with said data processing means.

16. A method as claimed in Claim 15, including in step c) the step of entering data defining maximum and minimum limits for mobile phase flow rates and pressures.

17. A method as claimed in Claim 15 or 16, including in step c) the step of entering a detector time constant.

18. A method as claimed in any of Claims 9 to 17, in which step d) comprises solving a set of equations relating mobile phase flow rate to the other parameters of the chromatographic apparatus to determine a series of maximum flow rates which cannot be exceeded while maintaining the required sensitivity and/or separation and falling within an allowable range for the apparatus and selecting the lowest of the series of maximum flow rates.

19. A method as claimed in Claim 18, in which step d) further comrpises solving a further set of equations relating mobile phase flow rate to the other parameters of the chromatographic apparatus to determine a series of minimum flow rates which have to be exceeded to maintain the required separation and sensitivity and to be within the allowable range for the apparatus and determining whether the lowest of the series of maximum flow rates is greater than the highest of the series of minimum flow rates.

20. A method as claimed in Claim 19 including the step of indicating that a set of operating conditions is valid if the lowest of the series of maximum flow rates is greater than or equal to the highest of the series of minimum flow rates.

21. A method as claimed in any of Claims 18 to 20 in which step d) comprises calculating the maximum mobile phase flow rate possible while maintaining a required separation and sensitivity or signal-to-noise ratio for each separating column, detector, time constant combination; calculating the minimum mobile phase flow rate possible while maintaining a required separation and sensitivity or signal-to-noise ratio and not exceeding apparatus limitations for each separating column, detector, time constant combination; checking that the maximum flow rate possible for a given combination is greater than or equal to the minimum flow rate possible for that combination and, if so, designating it a valid combination; calculating the analysis time for each valid separating column, detector, time constant combination using the associated maximum flow rate; and selecting the valid combination having the minimum calculated analysis time as the optimum apparatus configuration.

22. A method as claimed in any of Claims 9 to 21 in which the chromatographic separation is a liquid chromatographic separation.

## Fig.1.

## Fig.3.

## Fig.2.

| COLUMN NUMBER | LENGTH L (mm) | DIAMET. $d_c$ (mm) | PARTICLE SIZE $d_p$ (μm) | POROSITY $\epsilon$ | EFFIC-IENCY FACTOR $\eta$ | PERMEA-BILITY FACTOR $\phi$ | PRESSURE DROP $P_{col,min}$ | $P_{col,max}$ | FLOW RATE $F_{col,min}$ | $F_{col,max}$ | SAMPLE SIZE $Q_{col,max}$ |
|---|---|---|---|---|---|---|---|---|---|---|---|
| 1 | 300 | 4.6 | 10 | 0.63 | 1.0 | 1.0 | 6 | 61 | 0.08 | 6.4 | 0.24 |
| 2 | 150 | 4.6 | 5 | 0.61 | 1.0 | 1.0 | 25 | 246 | 0.16 | 12.8 | 0.24 |
| 3 | 100 | 4.6 | 3 | 0.58 | 0.9 | 1.1 | 83 | 834 | 0.27 | 21.3 | 0.24 |
| 4 | 250 | 4.6 | 8 | 0.63 | 1.0 | 1.0 | 10 | 100 | 0.1 | 8.0 | 0.24 |
| 5 | 250 | 2.0 | 8 | 0.63 | 1.0 | 1.1 | 11 | 110 | 0.02 | 1.5 | 0.04 |
| 6 | 250 | 1.0 | 8 | 0.63 | 0.9 | 1.2 | 12 | 120 | 0.004 | 0.4 | 0.02 |

EP 0 359 319 A2

2-IX-PHB 33489 R

# Fig.4a.

| EQN.NR | RELATIONSHIP |
|--------|--------------|
| 1 | $u \propto \dfrac{F}{\varepsilon\, d_c^2}$ |
| 2 | $Q \propto \dfrac{V_{in}}{D_p}$ |
| 3 | $t \propto \dfrac{L}{u}$ |
| 4 | $\Delta_p \propto \dfrac{\phi L u}{d_p^2}$ |
| 5 | $N \propto \dfrac{\eta L}{u\, d_p}$ |
| 6 | $h \propto \dfrac{\beta Q \sqrt{N}}{d_c^2\, \varepsilon L}$ |
| 7 | $V_{det.max} \propto \dfrac{Ft}{\sqrt{N}}$ |
| 8 | $\tau_{max} \propto \dfrac{t}{\sqrt{N}}$ |
| 9 | $R_s \propto \sqrt{N}$ |
| 10 | $n \propto \dfrac{\gamma}{\sqrt{\tau}}$ |
| 11 | $SNR \propto \dfrac{h}{n}$ |

3 - IX - PHB 33489 R

# Fig.4b.

| SYMBOL | RELATIONSHIP |
|---|---|
| $d_c$ | COLUMN DIAMETER |
| $d_p$ | PARTICLE SIZE |
| h | PEAK HEIGHT |
| n | NOISE |
| $\Delta p$ | PRESSURE DROP |
| t | RETENTION TIME |
| u | LINEAR VELOCITY |
| F | FLOW RATE |
| L | COLUMN LENGTH |
| N | NUMBER OF THEORETICAL PLATES |
| Q | SAMPLE SIZE (MASS UNITS) |
| $R_s$ | RESOLUTION |
| SNR | SIGNAL-TO-NOISE RATIO |
| $V_{det.max}$ | HIGHEST PERMISSABLE DETECTOR-CELL VOLUME |
| $V_{inj}$ | INJECTION VOLUME |
| $\beta$ | DETECTION SENSITIVITY FACTOR |
| $\gamma$ | DETECTION NOISE FACTOR |
| $\epsilon$ | COLUMN POROSITY |
| $\eta$ | COLUMN EFFICIENCY FACTOR |
| $\tau_{max}$ | HIGHEST PERMISSABLE DETECTION TIME CONSTANT |
| $\phi$ | COLUMN PERMEABILITY FACTOR |

## *Fig.5.*

| EQN.NR | RELATIONSHIP |
|---|---|
| (12) | $t = c_{12} \dfrac{L \epsilon d_c^2}{F}$ |
| (13) | $F2 = c_{13} \dfrac{d_p^2 \epsilon d_c^2}{\phi L} \triangle p$ |
| (14) | $F3 = c_{14} \dfrac{\eta L \epsilon d_c^2}{d_p} \dfrac{1}{R_s^2}$ |
| (15) | $F4 = c_{15} \dfrac{\beta^2 a^2 n \tau}{\gamma^2 d_c^2 \epsilon L d_p} \dfrac{1}{SNR^2}$ |
| (16) | $F5 = c_{16} \dfrac{L \epsilon d_c^2}{\eta} \dfrac{1}{\gamma_{max}^2}$ |
| (17) | $F6 = c_{17} \dfrac{\eta}{L d_p \epsilon d_c^2} V_{det.max}^2$ |

EP 0 359 319 A2

## Fig.6.

Requirements

Limits

Data Base

# Fig.7.

```
SYSTEM INPUT PARAMETERS
```
```
PEAKTABLE, i.e. FOR EACH PEAK
      RETENTION TIME
      PEAK HEIGHT*
      PEAK WIDTH (OR PLATE COUNT)*
      ASYMMETRY FACTOR*
 UNRETAINED TIME
 SAMPLE SIZE (INJECTION VOLUME AND DILUTION FACTOR)
 NOISE



 *OPTIONAL. IF NO VALUES FOR THE PEAK WIDTHS ARE PROVIDED,
 A VALUE FOR THE COLUMN PLATE COUNT IS NEEDED
```

```
LIMITS AND REQUIREMENTS
```
```
 REQUIRED RESOLUTION
 REQUIRED SIGNAL-TO-NOISE RATIO (SNR)
 MINIMUM AND MAXIMUM FLOW RATE
 MINIMUN AND MAXIMUN PRESSURE DROP
```

```
SYSTEM OUTPUT PARAMETERS
```
```
 PREDICTED VALUES FOR THE ANALYSIS TIME, RESOLUTION, SNR

 SELECTED COLUMN
 OPTIMUM FLOW RATE (AND RESULTING PRESSURE DROP)
 INJECTION VOLUME AND DILUTION FACTOR
 DETECTOR (CELL)
 ATTENUATION
 CHART SPEED
 TIME CONSTANT
```

# Fig.8a.

---

**A. SYSTEM INPUT PARAMETERS**

| CHARACTERISTIC | PEAK 0* | PEAK 1 | PEAK 2 |
|---|---|---|---|
| RETENTION TIME (S) | 79 | 91 | 180 |
| PEAK HEIGHT (AU) | 0.01 | 0.6 | 0.4 |
| PLATE COUNT | 23,000 | 23,000 | 23,000 |
| ASYMMETRY FACTOR | 1 | 1 | 1 |

```
UNRETAINED TIME              79s
SAMPLE SIZE                  0.1µg
NOISE (AU)                   0.01
INITIAL COLUMN               nr.4
INITIAL FLOW RATE            1 ml/min
INITIAL PRESSURE DROP        50 BAR

DECTECTOR (nr.1)
DETECTOR-CELL VOLUME                8µl
```

DETECTOR SENSITIVITY FACTOR ($\beta$)  1
DETECTOR NOISE FACTOR ($\gamma$)  1

```
ASSESSMENT
```
INITIAL RESOLUTION ($R_{s,min}$)  5.29
SIGNAL-TO-NOISE RATIO (SNR)  400

---

**B. LIMITS AND REQUIREMENTS**

| | |
|---|---|
| REQUIRED RESOLUTION | 1.5 |
| REQUIRED SIGNAL-TO-NOISE RATIO (SNR) | 80 |
| MINIMUM AND MAXIMUM FLOW RATE | 0.1 − 4ml/min |
| MINIMUM AND MAXIMUM PRESSURE DROP | 10 − 250 BAR |
| MAXIMUM SAMPLE SIZE | 1µg |
| DETECTION TIME CONSTANT | 20,50,100ms |

---

*Small peak assumed to be present at t=t$_o$

# Fig.8b.

## C. SPECIFIED COLUMN LIMITS

| COLUMN NR. | Fmin ml/min | Fmin ml/min | Pmin bar | Pmax bar | Qmax µg |
|---|---|---|---|---|---|
| 1 | 0.08 | 6.4 | 6 | 61 | 0.24 |
| 2 | 0.16 | 12.8 | 25 | 246 | 0.24 |
| 3 | 0.27 | 21.3 | 83 | 834 | 0.24 |
| 4 | 0.10 | 8.0 | 10 | 100 | 0.24 |
| 5 | 0.02 | 1.5 | 11 | 110 | 0.04 |
| 6 | 0.004 | 0.4 | 12 | 120 | 0.02 |

## D. SYSTEM OUTPUT PARAMETERS

OPTIMUM COLUMN      nr.2
PREDICTED ANALYSIS TIME $t_2$   34s
PREDICTED SIGNAL-TO-
NOISE RATIO      148
PREDICTED RESOLUTION      2.90
OPTIMUM FLOW RATE      3.2ml min
PREDICTED PRESSURE DROP      246bar

DETECTOR (nr.3)
DETECTOR-CELL VOLUME      1.2 µl
DECTECTOR SENSITIVITY
FACTOR ($\beta$)      0.6
DETECTOR NOISE FACTOR ($\gamma$) 2.0

## E. ADVICE

THE LIMITING FACTOR IS THE PRESSURE DROP OVER THE COLUMN. THE MAXIMUM PRESSURE DROP WILL NEED TO BE INCREASED IF YOU WANT TO REDUCE THE ANALYSIS TIME FURTHER.